# EUROPÄISCHE PATENTSCHRIFT

(11) **EP 1 950 518 B1**
(45) Veröffentlichungstag und Bekanntmachung des Hinweises auf die Patenterteilung: **04.07.2018**
(21) Anmeldenummer: 07123762.2
(22) Anmeldetag: 20.12.2007
(51) Int. Cl.: F28B 11/00, F28F 17/00, F28D 7/16, B01D 5/00, B01D 53/00, F28D 7/00, F28D 21/00

(54) **Verfahren und Vorrichtung zum Temperieren eines Mediums**
Method and device for tempering a medium
Dispositif et procédé destinés à tempérer un medium

(30) Priorität: 27.01.2007 DE 102007004192
(43) Veröffentlichungstag der Anmeldung: 30.07.2008
(73) Patentinhaber: Messer Group GmbH, 65812 Bad Soden (DE)
(72) Erfinder: Herzog, Friedhelm, Dr., 47803 Krefeld (DE); Terkatz, Stefan, 47807 Krefeld (DE)
(74) Vertreter: Münzel, Joachim R.

(56) Entgegenhaltungen:
- EP-A- 0 272 378
- EP-A- 0 395 457
- EP-A- 1 736 229
- DE-A1- 2 513 405
- US-A- 5 996 356
- US-A1- 2004 154 331
- US-B1- 6 318 117

## Beschreibung

Die Erfindung betrifft ein Verfahren gemäß dem Oberbegriff des Anspruchs 1 sowie eine Vorrichtung nach Anspruch 8 zum Temperieren eines Mediums. US 2004/0154331 offenbart ein derartiges Verfahren. Zum Beheizen oder Kühlen von festen, flüssigen oder gasförmigen Medien kommen Wärmetauscher zum Einsatz, bei denen das Medium mit einem flüssigen oder gasförmigen Wärmeträgerfluid in thermischen Kontakt gebracht wird. Der Wärmeaustausch erfolgt dabei entweder durch direkten Kontakt des Mediums mit dem Wärmeträgerfluid oder indirekt über Wärmetauscherflächen, wobei das Medium im letztgenannten Fall selbst nicht mit dem Wärmeträgerfluid in Berührung kommt. Je nach Aufgabe wird Wärme vom Wärmeträgerfluid auf das Medium übertragen oder umgekehrt.

Bei der indirekten Wärmeübertragung kommen beispielsweise so genannte Rohrbündelwärmetauscher zum Einsatz, bei denen das Wärmeträgerfluid oder das Medium durch eine Anzahl gerader oder spiral- oder U-förmig gebogener Rohre aus einem gut wärmeleitfähigen Material durch einen Mantelraum geführt wird, in dem die Rohre vom Medium bzw. dem Wärmeträgerfluid umströmt werden oder mit mediums- bzw. fluidführenden Leitungen thermisch verbunden sind. Um das Wärmeträgerfluid möglichst gleichmäßig auf die Rohre zu verteilen, ist mittels eines Rohrbodens ein Verteilerraum vom Mantelraum abgetrennt. Ebenso findet sich am strömungstechnisch hinteren Ende der Rohre ein gleichfalls durch einen Rohrboden vom Mantelraum abgetrennter Auffangraum zum Auffangen des mit dem Medium in Kontakt gebrachten Wärmeträgerfluids. Das Wärmeträgerfluid strömt also in den Verteilerraum ein, fließt von dort über die Rohre durch den Mantelraum hindurch und strömt in den Auffangraum ein, aus dem es anschließend abgeführt wird. Zwei Ausgestaltungen sind dabei besonders gebräuchlich: Zum einen können Verteilerraum und Auffangraum an beiden Stirnseiten des ungefähr zylindrisch ausgebildeten Mantelraumes angeordnet sein, wobei an beiden Stirnseiten jeweils ein Rohrboden vorgesehen ist. In diesem Falle durchläuft das Wärmeträgerfluid den Mantelraum in einer Richtung vom Verteilerraum zum Auffangraum. Wird das Wärmeträgerfluid mit Hilfe U-förmig gebogener Rohre durch den Mantelraum geführt, genügt dagegen ein Rohrboden an einer Stirnseite des Mantelraumes; in diesem Falle ist der durch den Rohrboden vom Mantelraum abgetrennte Vorraum durch eine Trennwand in einen Verteilerraum und einen Auffangraum unterteilt. Es ist auch bekannt (DE 27 53 483 A1), mehrere Wärmeträgerfluide gleichzeitig durch den Mantelraum eines Wärmetauschers zu führen. In diesem Falle sind Verteilerraum und Auffangraum durch Trennwände in verschiedene, strömungstechnisch abgetrennte Kammern unterteilt, die jeweils separat voneinander durch eines oder mehrere den Mantelraum querende Rohre miteinander verbunden sind.

Der jeweils dem Wärmetauscher zuzuführende Mengenstrom eines gegebenen Wärmeträgerrfluids richtet sich insbesondere nach der geforderten Wärmeübertragungsleistung, die wiederum von Wärmekapazität, Mengenstrom des zu behandelnden Mediums und der geforderten Temperaturdifferenz abhängt, sowie nach den apparativen Möglichkeiten der Wärmeübertragung. Sollen große Mengen an Medium beheizt oder gekühlt werden, sind unter Umständen große Mengen an Wärmeträgerfluid erforderlich, was mit einem hohen apparativem Aufwand verbunden ist, da die großen Massenströme insbesondere leistungsstarke Fördereinrichtungen und größere Leitungsquerschnitte bei den Zu- und Ableitungen erfordern.

Aufgabe der vorliegenden Erfindung ist daher, ein Verfahren sowie eine Vorrichtung zum Temperieren eines Mediums zu schaffen, bei dem das Wärmeträgerfluid in besonders wirtschaftlicher Weise eingesetzt wird.

Diese Aufgabe wird durch ein Verfahren mit den Merkmalen des Patentanspruchs 1 gelöst.

Erfindungsgemäß erfolgt die Wärmeübertragung zwischen Medium und Wärmeträgerfluid in zwei Schritten. Im ersten Schritt erfolgt in bekannter Weise eine Wärmeübertragung in einem ersten funktionalen Teil eines Wärmetauschers. Als "Wärmetauscher" soll hier jede wärmetechnische Apparatur verstanden werden, bei der Wärme von einem festen, flüssigen oder gasförmigen Medium (hier: "Medium") auf ein anderes, flüssiges oder gasförmiges Medium (hier: "Wärmeträgerfluid") übertragen wird. Es ist im Rahmen der Erfindung auch möglich, dass das Medium seinen Aggregatszustrand infolge des thermischen Kontakts mit dem Wärmeträgerfluid ändert. Als "funktionaler Teil" wird hier ein Teil eines Wärmetauschers verstanden, in dem eine Wärmeübertragung zwischen Medium und Wärmeträgerfluid erfolgen kann; beispielsweise handelt es sich um ein Rohr oder eine Gruppe von Rohren eines Rohbündelwärmetauschers. Im Anschluss an den Wärmeaustausch im ersten funktionalen Teil des Wärmetauschers wird das Wärmeträgerfluid seinerseits temperiert, d.h. in dem Fall, in dem das Wärmeträgerfluid zum Kühlen des Mediums eingesetzt wurde, wird die beim thermischen Kontakt mit dem Medium gewonnene Wärme dem Wärmeträgerfluid wieder entzogen, und in dem Fall, in dem das Wärmeträgerfluid zum Beheizen des Mediums eingesetzt wurde, wird die auf das Medium übertragene Wärme ersetzt. Anschließend wird das Wärmeträgerfluid in einem zweiten funktionalen Teil des Wärmetauschers wiederum zum Temperieren des Mediums eingesetzt. Dadurch kann der Massenstrom des Wärmeträgerfluids gegenüber konventionellen Wärmetauschern erheblich reduziert werden und die zum Transport des Wärmeträgerfluids erforderlichen Armaturen können entsprechend kleiner ausgelegt werden. Zugleich lassen sich auch vorhandene Wärmetauscher leicht im Sinne der Erfindung nachrüsten, indem durch die Einrichtung von Trennflächen innerhalb der Vor- bzw. Auffangräume der Wärmetauscher der Strömungsweg des Wärmeträgerfluids in voneinander trennbare Abschnitte unterteilt wird.

Eine vorteilhafte Weiterbildung der Erfindung sieht vor, dass das Wärmeträgerfluid mehr als zwei funktionale Teile des Wärmetauschers durchläuft, wobei in jedem der funktionalen Teile ein Wärmeaustausch mit dem Medium erfolgt und nach Durchlaufen eines jeden der funktionalen Teile, mit oder ohne Ausnahme des zuletzt durchlaufenen funktionalen Teils, die dem Wärmeträgerfluid beim thermischen Kontakt mit dem Medium entzogene bzw. aufgenommene Wärme zumindest teilweise wieder zugeführt bzw. entzogen wird. Werden gemäß dem erfindungsgemäßen Verfahren zwei funktionale Teile des Wärmetauschers durchlaufen, kann der Massenstrom im Idealfall auf die Hälfte des konventionell benötigten Massenstroms reduziert werden. Bei drei funktionalen Teilen reduziert sich der Massenstrom auf ein Drittel, usw. Die Reduktion des Massenstroms wird freilich erkauft durch die zusätzlichen Verfahrensschritte zur Temperierung des Wärmeträgerfluids. Die Wirtschaftlichkeit des erfindungsgemäßen Verfahrens bestimmt sich also insbesondere durch den für die Temperierung des Wärmeträgerfluids benötigten apparativen Aufwand im Vergleich zu den durch die Reduzierung des Massenstroms erreichbaren Einsparungen.

Vorteilhafterweise erfolgt die Zuführung bzw. die Abfuhr der beim thermischen Kontakt mit dem Medium abgegebenen bzw. aufgenommenen Wärme durch thermischen Kontakt des Wärmeträgerfluids mit einem Temperatur-Ausgleichsmedium. Als Ausgleichsmedium kommt eine weitere flüssige oder gasförmige Substanz in Betracht; beispielsweise handelt es sich um Luft oder Wasser, insbesondere um Wasser aus einem Fluss oder Kühlteich. Insbesondere, wenn die Temperierung des Wärmeträgerfluids mittels eines kostenlos zur Verfügung stehenden Ausgleichsmediums, wie Umgebungsluft oder Flusswasser erfolgt, ist eine besonders wirtschaftliche Verfahrensführung gewährleistet.

Um die Wärmeübertragungsleistung des Wärmeträgerfluids weiter zu verbessern, wir das Wärmeträgermedium vorteilhaft unter Überdruck, beispielsweise einem Druck von 2 bis 20 bar, durch den Wärmetauscher bzw. die Einrichtung zum Temperieren geführt.

Zweckmäßigerweise wird das Wärmeträgerfluid teilweise im Kreislauf geführt. Dadurch wird der Bedarf an Wärmeträgerfluid zur Nutzung des Verfahrens weiter reduziert.

Ein bevorzugter Einsatz des erfindungsgemäßen Verfahrens erfolgt bei einem Kryokondensator, wie er beispielsweise aus der DE 10 2004 026 908 A1 bekannt ist. Eine solcher Kryokondensator wird als "Wärmetauscher" im Sinne der Erfindung aufgefasst. Das erfindungsgemäße Verfahren kann bei derartigen Anlagen gleich zweifach eingesetzt werden: Zum einen bei der Kryokondensation, also der Reinigung eines Gasstroms durch Kontaktierung mit einem kalten Wärmeträgerfluid, wodurch im Gasstrom enthaltene Stoffe zur Kondensation gebracht werden; zum anderen bei der Regeneration, bei der im Wärmetauscher bzw. Kondensator anhaftende Kondensate, insbesondere Eis, durch thermischen Kontakt mit einem warmen Wärmeträgerfluid auftauen und anschließend abgeführt werden können.

Eine vorteilhafte Weiterbildung dieser Ausgestaltung sieht den Einsatz des erfindungsgemäßen Verfahrens bei Kryokondensationsanlagen mit wenigstens zwei wechselweise betreibbaren Kryokondensatoren vor. Bei derartigen Anlagen befindet sich jeweils ein erster Kryokondensator im Betriebszustand und wenigstens ein weiterer Kryokondensator im Abtauzustand, wobei das in dem im Betriebszustand befindlichen ersten Kryokondensator durch den Wärmeaustausch mit dem Medium erwärmte Wärmeträgerfluid dazu eingesetzt wird, den oder die sich im Abtauzustand befindlichen weiteren Kryokondensator/en zu erwärmen. Erfindungsgemäß wird das Wärmeträgerfluid nach Durchlaufen des oder der weiteren Kryokondensator/en einer Einrichtung zum Heizen des Wärmeträgerfluids zugeführt und anschließend dem oder den weiteren Kryokondensator zwecks abermaliger Aufheizung zugeführt. Das zu temperierende Medium ist in diesem Fall das an den Wänden des weiteren Kryokondensators oder der weiteren Kryokondensatoren niedergeschlagene Kondensat, bei dem es sich insbesondere um Eis handelt. Durch den Einsatz des erfindungsgemäßen Verfahrens genügt die Menge des im ersten Kryokondensator verdampfenden Wärmeträgerfluids, um das Kondensat in dem oder den weiteren Kryokondensator/en zuverlässig aufzuheizen.

Die Aufgabe der Erfindung wird auch durch eine Vorrichtung zum Temperieren eines Mediums durch thermischen Kontakt mit einem Wärmeträgerfluid gelöst, die mit einem Wärmetauscher ausgerüstet ist, der mehrere miteinander sowohl in Bezug auf das Medium als auch in Bezug auf das Wärmeträgerfluid miteinander strömungsverbundene funktionale Teile aufweist, wobei jeweils zwei strömungstechnisch aufeinander folgende funktionale Teile mit einer Leitung für das Wärmeträgerfluid miteinander verbunden sind, in welcher Leitung eine Einrichtung zum Temperieren des Wärmeträgerfluids angeordnet ist. Erfindungsgemäß sind also jeweils zwei funktionale Teile des Wärmetauschers unter Zwischenschaltung einer Einrichtung zum Temperieren des Wärmeträgerfluids miteinander strömungsverbunden. Dadurch kann beim Einsatz der Vorrichtung der Massenstrom des Wärmeträgerfluids gegenüber konventionellen Wärmetauschern gleicher Leistung deutlich reduziert werden.

Eine vorteilhafte Ausgestaltung der Erfindung sieht vor, dass der Wärmetauscher mit einem Mantelraum ausgerüstet ist, in dem das Wärmeträgerfluid durch mehrere vom Medium umspülte, jeweils einen Fluideingang und einem Fluidausgang aufweisende Leitungswege hindurchgeführt wird, wobei der Fluidausgang wenigstens eines ersten Leitungsweges mit der Einrichtung zum Temperieren des Wärmeträgerfluids und mit dem Fluideingang von wenigstens einem zweiten Leitungsweg für das Wärmeträgerfluid strömungsverbunden ist.

Als vorteilhafte Einrichtung zum Temperieren dient insbesondere eine elektrische Kühl- oder Heizeinrichtung oder eine mit der Außenatmosphäre oder mit Kühlwasser in thermischen Kontakt stehende Wärmetauscherkonstruktion, beispielsweise eine Rippenrohrkonstruktion.

Eine zweckmäßige Weiterbildung der Erfindung sieht vor, dass der Wärmetauscher und die Einrichtung zum Temperieren in einem Kreislauf oder einem Teilkreislauf des Wärmeträgerfluids integriert sind.

Um eine effiziente Wärmeübertragung zu ermöglichen, ist es vorteilhaft, dass das Wärmeträgerfluid mittels einer Fördereinrichtung durch die funktionalen Teile des Wärmetauschers und durch die Einrichtung zum Temperieren des Wärmeträgerfluids bewegt wird. Hierbei ist jedoch zu berücksichtigen, dass die Fördereinrichtung ihrerseits Wärme in das Wärmeträgerfluid einträgt. Demzufolge ist beim Einsatz des Wärmeträgerfluids als Kühlmittel für das Medium darauf zu achten, dass die durch die Fördereinrichtung eingetragene Wärmemenge klein gegenüber der Kühlleistung der Einrichtung zur Temperierung des Wärmeträgerfluids ist. Kommt das Wärmeträgerfluid jedoch als Heizmittel zum Einsatz, erhöht die durch die Fördereinrichtung eingetragene Wärme die Effizienz des Verfahrens.

Bevorzugte Wärmeträgerfluide sind insbesondere Sole, Wasser, Öl, Luft oder technische Gase wie Stickstoff oder Kohlendioxid in flüssigem oder gasförmigem Zustand. Als Quelle für das Wärmeträgerfluid können Lagertanks oder Kältemaschinen oder Kühltürme für Kühlwasser dienen. Das Wärmeträgerfluid und die Quelle werden entsprechend der gewünschten Kühlwirkung sowie nach den Gegebenheiten beim Einsatzort des Verfahrens gewählt. Mit Hilfe von Kühlwasser wird zum Beispiel eine Kühltemperatur von ca. 20 °C bis 30 °C erreicht. In der Regel können tiefere Temperaturen von ca. -40 °C bis ca. 0°C durch Einsatz einer Kältemaschine erzielt werden. Noch tiefere Temperaturen können in Anlagen mit einem verdampfenden Kältemittel gewährleistet werden. Unter dem Begriff "verdampfende Wärmeträgerfluide" sind insbesondere organische Stoffe oder deren Mischungen, wie Frigen, oder tiefkalte flüssige oder überkritische Gase, wie flüssiger Stickstoff, zu verstehen. Kommt ein gasförmiges Wärmeträgerfluid zum Einsatz, erweist es sich als vorteilhaft, das Wärmeträgerfluid mit einem hohen Druck von beispielsweise 2 bis 20 bar durch den Wärmetauscher bzw. die Einrichtung zum Temperieren zu führen. Bereits bei einer Verdoppelung des Drucks reduziert sich der für die gleiche Wärmeübertragungsleistung erforderliche Betriebsvolumenstrom auf die Hälfte.

Die Erfindung wird nun durch Ausführungsbeispiele näher erläutert. In schematischen Ansichten zeigen
Fig. 1: Eine erfindungsgemäße Vorrichtung in einer ersten Ausführungsform und
Fig. 2: Eine erfindungsgemäße Vorrichtung in einer zweiten Ausführungsform.

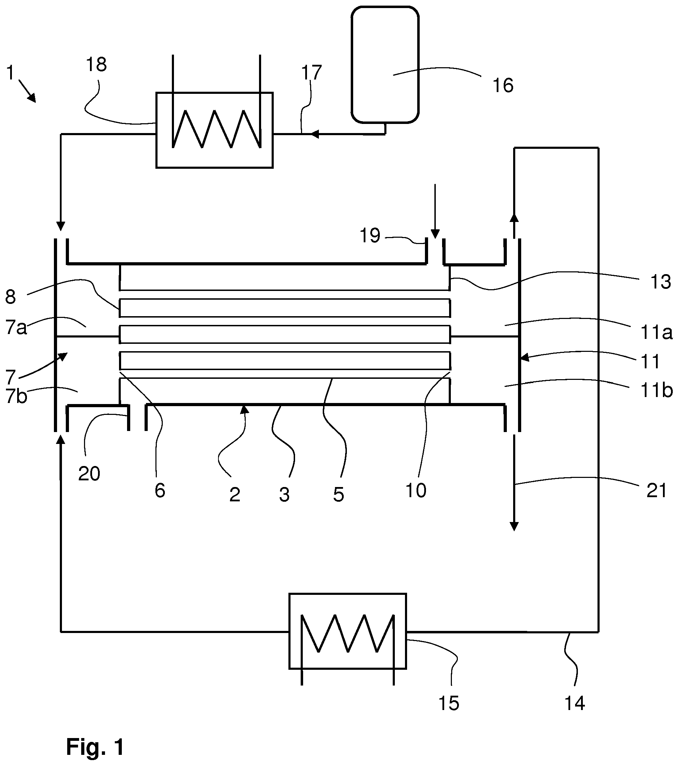

Die Vorrichtung 1 gemäß Fig. 1 umfasst einen Wärmetauscher 2, der im Ausführungsbeispiel als Rohrbündelwärmetauscher ausgestaltet ist. Dabei umfasst der Wärmetauscher 2 einen Mantelraum 3, der von einer Vielzahl von Leitungsrohren 5 durchzogen wird. Die Leitungsrohre 5 werden beim Einsatz der Vorrichtung 1 in der unten näher beschriebenen Weise von einem gasförmigen oder flüssigen Wärmeträgerfluid durchströmt. Außerhalb der Leitungsrohre 5 wird der Mantelraum beim bestimmungsgemäßen Einsatz von einem zu temperierenden Medium durchströmt. Die Leitungsrohre 5 sind jeweils an einer Eintrittsöffnung 6 mit einem Vorraum 7 verbunden, der strömungstechnisch durch einen Rohrboden 8 vom Mantelraum 3 getrennt ist. Die Leitungsrohre 5 münden jeweils mit einer Austrittsöffnung 10 in einem Auffangraum 11 ein, der gleichfalls durch einen Rohrboden 13 strömungstechnisch vom Mantelraum 3 getrennt ist. Vorraum 7 und Auffangraum 11 sind jeweils durch strömungsdichte Trennwände in jeweils zwei voneinander getrennte Teilräume 7a, 7b bzw. 11a, 11b unterteilt. Jeweils mehrere der Leitungsrohre 5 führen vom Teilraum 7a des Vorraums zum Teilraum 11a des Auffangraums 11 sowie vom Teilraum 7b zum Teilraum 11b. Zugleich ist der Teilraum 11a des Auffangraums 11 über eine Leitung 14 mit dem Teilraum 7b des Vorraums 7 verbunden. Die Leitung 14 sowie die Leitungsrohre 5 können druckfest ausgebildet sein, damit das Wärmeträgerfluid mit einem höheren Druck von besipielsweise 2 bis 20 bar durch die Leitung 14 bzw. die Leitungsrohre 5 fließen kann, um einen größeren Wärmetransport durch den Massenstrom des Wärmeträgerfluids zu ermöglichen.

In der Leitung 14 ist eine Einrichtung 15 zum Temperieren des Wärmeträgerfluids vorgesehen. Im Ausführungsbeispiel ist diese ein Wärmetauscher, in dem das Wärmeträgerfluid in thermischen Kontakt mit einem Austauschmedium gebracht wird. Beispielsweise handelt es sich bei dem Austauschmedium um Umgebungsluft und bei dem Wärmetauscher um eine Rippenrohrkonstruktion, die den thermischen Kontakt zwischen dem Wärmeträgerfluid und der Umgebungsluft vermittelt.

Beim Einsatz der Vorrichtung 1 wird das aus einem Vorratstank 16, beispielsweise einem Stickstoff-Flüssigtank, entnommene Wärmeträgerfluid über eine Eingangsleitung 17 zum Wärmetauscher 2 geführt. Um eine hinreichende Fließgeschwindigkeit des Wärmeträgerfluids zu erzielen, steht das Wärmeträgerfluid im Vorratstank 16 unter einem gewissen Überdruck. Es ist im Rahmen der Erfindung jedoch auch möglich, eine Fördereinrichtung vorzusehen, mit der das Wärmeträgerfluid durch den Wärmetauscher 2 und die Einrichtung 15 zum Temperieren geführt wird. In der Eingangsleitung 17 ist eine Einrichtung 18 zum Temperieren des Wärmeträgerfluids angeordnet, um das Wärmeträgerfluid auf eine gewünschte Ausgangtemperatur zu bringen. Das auf diese Weise vortemperierte Fluid gelangt in den Teilraum 7a des Vorraums 7 und verteilt sich auf die mit diesem Teilraum 7a strömungsverbundenen Leitungsrohre 5.

Das zu temperierende Medium, beispielsweise ein Gas- oder Flüssigkeitsstrom wird dem Wärmetauscher 2 an einem Eingangsstutzen 19 des Mantelraums 3 zugeführt und durchströmt anschließend den Mantelraum 3, wobei das Medium gegebenenfalls durch hier nicht gezeigte Umlenkbleche geführt wird, um die Aufenthaltsdauer des Mediums im Mantelraum 3 zu verlängern. Schließlich tritt das temperierte Medium an einem Ausgangsstutzen 20 aus dem Mantelraum aus und wird beispielsweise einer weiteren Verwendung zugeführt. Beim Medium kann es sich im Übrigen auch um einen festen Stoff handeln, beispielsweise um kondensierte Bestandteile des zuvor durch den Wärmetauscher 2 geführten Gasstroms, die durch den Kontakt mit in diesem Falle wärmerem Wärmeträgerfluid auftauen und über den Ausgangsstutzen 20 abgeführt werden können.

An den aus einem gut leitfähigen Material bestehenden Leitungsrohren 5 erfolgt der Wärmeaustausch zwischen Wärmeträgerfluid und Medium. Die Vorrichtung 1 erlaubt sowohl die Fahrweise als Kühlaggregat, d.h. das Medium wird gekühlt, wobei das Wärmeträgerfluid Wärme aufnimmt, oder als Heizaggregat, d.h. das Medium wird erwärmt, wobei das Wärmeträgerfluid Wärme abgibt. Im Folgenden soll beispielhaft die Fahrweise als Kühlaggregat näher erläutert werden.

Beim thermischen Kontakt an den Wänden der Leitungsrohre 5 nimmt das Wärmeträgerfluid Wärme vom Medium auf, das sich dementsprechend abkühlt. Das erwärmte Wärmeträgerfluid gelangt über den Teilraum 11a des Auffangraumes 11 über die Leitung 14 zur Einrichtung 15 zur Temperierung des Wärmeträgerfluids. Im beispielhaft gewählten Modus der Vorrichtung 1 als Heizaggregat erfolgt in der Einrichtung 15 eine Kühlung des erwärmten Wärmeträgerfluids. Dabei gibt das Wärmeträgerfluid Wärme an ein Ausgleichsmedium, beispielsweise Luft oder Flusswasser, ab. Das auf diese Weise gekühlte Wärmeträgerfluid gelangt anschließend über die Leitung 14 in den Teilraum 7b des Vorraums 7, von wo es an Leitungsrohren 5 erneut mit dem Medium in thermischen Kontakt kommt und erneut Wärme vom Medium aufnimmt. Nach der erneuten Wärmeaufnahme gelangt das Wärmeträgerfluid in den Teilraum 11b, von wo es entweder, wie in den Zeichnungen gezeigt, abgeführt wird, oder abermals in einer Einrichtung zum Temperieren gekühlt und anschließend ein weiteres Mal dem Wärmetauscher zugeführt wird. Das aus dem Teilraum 11b abströmende Wärmeträgerfluid wird schließlich über eine Ausgangsleitung 21 abgeführt.

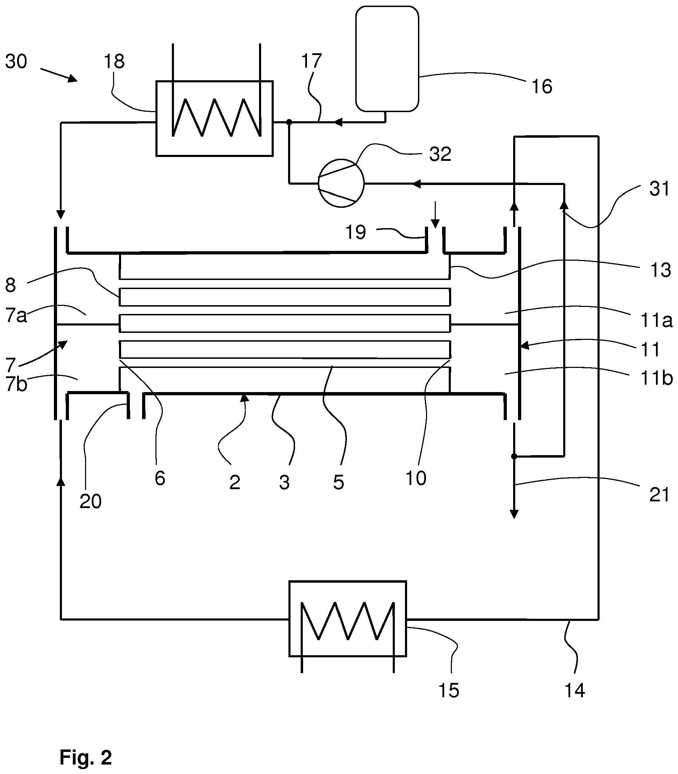

Bei der in Fig. 2 gezeigten Vorrichtung 30, bei der im Übrigen gleichwirkende Bauteile mit den gleichen Bezugsziffern wie in Fig. 1 bezeichnet sind, erfolgt eine teilweise Kreislaufführung des Wärmeträgerfluids. Dazu zweigt von der Ausgangsleitung 21 eine Rückleitung 31 ab, die in die Eingangsleitung 17 einmündet und über die zumindest ein Teil des Wärmeträgerfluids in die Eingangsleitung 17, strömungstechnisch vor der Einrichtung 18 zum Temperieren des Wärmeträgerfluids, eingespeist wird. Das Wärmeträgerfluid wird mittels einer Fördereinrichtung 32 im Kreislauf gefördert. Bei derartigen zirkulierenden Systemen ergibt sich der Vorteil, dass Armaturen und Strömungsmaschinen zum Transport des Wärmeträgerfluids für einen kleineren Massenstrom ausgelegt werden müssen, als dies bei konventionellen Systemen mit zirkulierendem Wärmeträgerfluid möglich ist.

Durch das zwei- oder mehrfache Durchlaufen des Wärmetauschers 2 kann der Mengenstrom des zur Temperierung des Mediums erforderlichen Wärmeträgerfluids deutlich reduziert werden. Insbesondere bei Kryokondensationsanlagen, die mit mindestens zwei wechselweise betriebenen Anlagen aufgebaut sind (Mehrfachanlagen), von denen sich jeweils eine im Betriebszustand und die andere/n im Abtauzustand befinden, lässt sich das erfindungsgemäße Verfahren vorteilhaft anwenden. Üblicherweise wird das in der sich im Betriebszustand befindlichen Anlage verdampfende Wärmeträgerfluid (in der Regel Stickstoff) dazu genutzt, die sich im Abtauzustand befindliche/n Anlage aufzuwärmen und dabei etwaige Eisablagerungen abzutauen. Oftmals reicht jedoch die verdampfende Gasmenge nicht aus, um die Anlage/n hinreichend zu erwärmen, und es muss zusätzlicher Stickstoff zugeführt werden. Durch die erfindungsgemäße Verfahrensführung ist es jedoch möglich, die gleiche Heizleistung mit einer geringeren Stickstoffmenge zu erbringen; die zusätzliche Zuführung von Stickstoff ist nicht mehr erforderlich.

Der Einsatz des erfindungsgemäßen Verfahrens ist nicht auf den Einsatz in Wärmetauschern beschränkt. Vielmehr kann das erfindungsgemäße Verfahren in allen wärmetechnischen Apparaten, bei denen zur Abfuhr oder Zufuhr von Energie ein Wärmeträgerfluid verwendet wird, eingesetzt werden, um den Massenstrom des Wärmeträgerfluids zu reduzieren.

### Bezugszeichenliste

- 1.: Vorrichtung
- 2.: Wärmetauscher
- 3.: Mantelraum
- 4.: -
- 5.: Leitungsrohr
- 6.: Eintrittsöffnung
- 7.: Vorraum
- 7a: Teilraum
- 7b: Teilraum
- 8.: Rohrboden
- 9.: -
- 10.: Austrittsöffnung
- 11.: Auffangraum
- 11a: Teilraum
- 11b: Teilraum
- 12.: -
- 13.: Rohrboden
- 14.: Leitung
- 15.: Einrichtung zum Temperieren des Wärmeträgerfluids
- 16.: Vorratstank
- 17.: Eingangsleitung
- 18.: Einrichtung zum Temperieren des Wärmeträgerfluids
- 19.: Eingangsstutzen
- 20.: Ausgangsstutzen
- 21.: Ausgangsleitung
- 22. - 29.: -
- 30.: Vorrichtung
- 31.: Rückleitung
- 32.: Fördereinrichtung

## Patentansprüche

1. Verfahren zum Temperieren eines Mediums durch thermischen Kontakt mit einem Wärmeträgerfluid in einem in mehrere funktionale Teile unterteilten Wärmetauscher (2), wobei
das Medium in einem ersten funktionalen Teil des Wärmetauschers (2) mit dem Wärmeträgerfluid in thermischen Kontakt gebracht wird, wobei dem Wärmeträgerfluid Wärme entzogen oder zugeführt wird, die zumindest teilweise auf das Medium übertragen bzw. diesem entzogen wird, anschließend in einer Einrichtung (15) zum Temperieren des Wärmeträgerfluids die entzogene bzw. aufgenommene Wärme dem Wärmeträgerfluid wenigstens teilweise wieder zugeführt bzw. entzogen wird und anschließend das auf diese Weise erwärmte bzw. gekühlte Wärmeträgerfluid in einem zweiten funktionalen Teil des Wärmetauschers (2) wieder mit dem Medium zwecks Wärmeaustausch in thermischen Kontakt gebracht wobei dem Wärmeträgerfluid erneut Wärme entzogen oder zugeführt wird, **dadurch gekennzeichnet, dass** das Wärmeträgerfluid anschließend abgeführt wird.

2. Verfahren nach Anspruch 1, **dadurch gekennzeichnet, dass** das Wärmeträgerfluid mehr als zwei funktionale Teile des Wärmetauschers (2) durchläuft, wobei in jedem der funktionalen Teile ein Wärmeaustausch mit dem Medium erfolgt und nach Durchlaufen eines jeden der funktionalen Teile, mit oder ohne Ausnahme des zuletzt durchlaufenen funktionalen Teils, die dem Wärmeträgerfluid beim thermischen Kontakt mit dem Medium entzogene bzw. aufgenommene Wärme zumindest teilweise wieder zugeführt bzw. entzogen wird und das Wärmeträgerfluid anschließend abgeführt wird

3. Verfahren nach einem der vorhergehenden Ansprüche, **dadurch gekennzeichnet, dass** in der Einrichtung (15) zum Temperieren des Wärmeträgerfluids die Zuführung bzw. die Abfuhr der beim thermischen Kontakt mit dem Medium abgegebenen bzw. aufgenommenen Wärme durch thermischen Kontakt mit einem Temperatur-Ausgleichsmedium, beispielsweise Umgebungsluft, erfolgt.

4. Verfahren nach Anspruch 4, **dadurch gekennzeichnet, dass** als Wärmeträgerfluid ein gasförmiges Fluid zum Einsatz kommt, das mit einem Druck von 2 bis 20 bar durch den Wärmetauscher (2) und die Einrichtung (15) zum Temperieren geführt wird.

5. Verfahren nach einem der vorhergehenden Ansprüche, **dadurch gekennzeichnet, dass** das Wärmeträgerfluid teilweise im Kreislauf geführt wird.

6. Verfahren nach einem der vorhergehenden Ansprüche, **gekennzeichnet durch** den Einsatz zur Reinigung eines Gasstroms und/oder zum Abtauen von Kondensaten in einem Kryokondensator.

7. Verfahren nach Anspruch 6, **gekennzeichnet durch** den Einsatz in einer Kryokondensationsanlage mit wenigstens zwei wechselweise betreibbaren Kryokondensatoren, von denen jeweils ein erster Kryokondensator im Betriebszustand und wenigstens ein weiterer Kryokondensator im Abtauzustand befindlich ist, wobei das in dem sich im Betriebszustand befindlichen Kryokondensator durch den Wärmeaustausch mit dem Medium erwärmte Wärmeträgerfluid dazu eingesetzt wird, den/die sich im Abtauzustand befindliche/n Kryokondensator/en zu erwärmen, wobei das Wärmeträgerfluid nach Durchlaufen eines ersten funktionalen Teils des/der weiteren Kryokondensator/en einer Einrichtung zum Heizen des Wärmeträgerfluids zugeführt und anschließend einem weiteren funktionalen Teil des/der weiteren Kryokondensator/en zugeführt wird.

8. Vorrichtung zum Durchführen des Verfahrens nach einem der vorhergehenden Ansprüche, mit einer Quelle (16) für das Wärmeträgerfluid, mit einem Wärmetauscher (2), der mehrere miteinander sowohl in Bezug auf das Medium als auch in Bezug auf das Wärmeträgerfluid miteinander strömungsverbundene funktionale Teile zum Übertragen der Wärme aufweist, wobei jeweils zwei strömungstechnisch aufeinander folgende funktionale Teile mit einer Leitung (14) für das Wärmeträgerfluid miteinander verbunden sind, in welcher Leitung (14) eine Einrichtung (15) zum Temperieren des Wärmeträgerfluids angeordnet ist und mit einer Ausgangsleitung (21) zum Abführen des Wärmeträgerfluids.

9. Vorrichtung nach Anspruch 8, **dadurch gekennzeichnet,**
**dass** der Wärmetauscher (2) mit einem Mantelraum (3) ausgerüstet ist, in dem das Wärmeträgerfluid durch mehrere vom Medium umspülte, jeweils einen Fluideingang (6) und einem Fluidausgang (10) aufweisende Leitungswege (5) hindurchgeführt wird, wobei der Fluidausgang (10) wenigstens eines ersten Leitungsweges mit der Einrichtung (15) zum Temperieren des Wärmeträgerfluids und mit dem Fluideingang (6) von wenigstens einem zweiten Leitungsweg (5) für das Wärmeträgerfluid strömungsverbunden ist.

10. Vorrichtung nach einem der Ansprüche 8 oder 9, **dadurch gekennzeichnet, dass** als Einrichtung (15) zum Temperieren eine elektrische Kühl- oder Heizeinrichtung vorgesehen ist.

11. Vorrichtung nach einem der Ansprüche 8 bis 10, **dadurch gekennzeichnet, dass** als Einrichtung (15) zum Temperieren eine mit der Außenatmosphäre oder mit Kühlwasser in thermischen Kontakt stehende Wärmetauscherkonstruktion, beispielsweise eine Rippenrohrkonstruktion vorgesehen ist.

12. Vorrichtung nach einem der Ansprüche 8 bis 11, **dadurch gekennzeichnet, dass** das Wärmeträgerfluid mittels einer Fördereinrichtung (32) durch die funktionalen Teile des Wärmetauschers (2) und durch die Einrichtung (15) zum Temperieren des Wärmeträgerfluids bewegt wird.

13. Vorrichtung nach einem der Ansprüche 8 bis 12, **dadurch gekennzeichnet, dass** als Wärmeträgerfluid Sole, Wasser, Öl, Luft, technisches Gas wie Stickstoff, Kohlendioxid in flüssigem oder gasförmigem Zustand, zum Einsatz kommt.

## Claims

1. Method for controlling the temperature of a medium by way of thermal contact with a heat carrier fluid in a heat exchanger (2) which is subdivided into multiple functional parts, wherein,
in a first functional part of the heat exchanger (2), the medium is brought into thermal contact with the heat carrier fluid, wherein heat is extracted from or supplied to the heat carrier fluid, which heat is at least partially transferred to the medium or extracted therefrom, then, in a device (15) for controlling the temperature of the heat carrier fluid, the extracted or absorbed heat is at least partially supplied to or extracted from the heat carrier fluid again, and then, in a second functional part of the heat exchanger (2), the heat carrier fluid heated or cooled in this way is brought into thermal contact with the medium again for the purpose of heat exchange, wherein heat is extracted from or supplied to the heat carrier fluid once more,
**characterized in that** the heat carrier fluid is then discharged.

2. Method according to Claim 1, **characterized in that** the heat carrier fluid passes through more than two functional parts of the heat exchanger (2), wherein, in each of the functional parts, heat is exchanged with the medium and, after passing through each of the functional parts, with or without the exception of the functional part which is passed through last, the heat extracted from or absorbed by the heat carrier fluid during the thermal contact with the medium is at least partially supplied or extracted again, and the heat carrier fluid is then discharged.

3. Method according to either of the preceding claims, **characterized in that**, in the device (15) for controlling the temperature of the heat carrier fluid, the supply or the discharge of the heat which is released or absorbed during the thermal contact with the medium is realized by way of thermal contact with a temperature compensation medium, for example ambient air.

4. Method according to Claim 4, **characterized in that** a gaseous fluid which is conducted at a pressure of 2 to 20 bar through the heat exchanger (2) and the device (15) for temperature control is used as a heat carrier fluid.

5. Method according to one of the preceding claims, **characterized in that** the heat carrier fluid is partially conducted in a circuit.

6. Method according to one of the preceding claims, **characterized by** use for the cleaning of a gas flow and/or for the thawing of condensates in a cryocondenser.

7. Method according to Claim 6, **characterized by** use in a cryocondensation installation having at least two cryocondensers which are able to be operated alternately and of which in each case one first cryocondenser is in the operating state and at least one further cryocondenser is in the thawing state, wherein the heat carrier fluid which is heated in the cryocondenser which is in the operating state by way of the heat exchange with the medium is used for heating the cryocondenser(s) which is/are in the thawing state, wherein, after passing through a first functional part of the further cryocondenser(s), the heat carrier fluid is supplied to a device for heating the heat carrier fluid and then to a further functional part of the further cryocondenser(s) .

8. Apparatus for carrying out the method according to one of the preceding claims, having a source (16) for the heat carrier fluid, having a heat exchanger (2) which has multiple functional parts for transferring the heat, which parts are flow-connected to one another both with respect to the medium and with respect to the heat carrier fluid, wherein in each case two functional parts which follow one another in terms of flow are connected to one another by way of a line (14) for the heat carrier fluid, in which line (14) a device (15) for controlling the temperature of the heat carrier fluid is arranged, and having an outlet line (21) for discharging the heat carrier fluid.

9. Apparatus according to Claim 8, **characterized in that** the heat exchanger (2) is provided with a jacket space (3) in which the heat carrier fluid is conducted through multiple line paths (5), which are flowed around by the medium and which each have a fluid inlet (6) and a fluid outlet (10), wherein the fluid outlet (10) of at least one first line path is flow-connected to the device (15) for controlling the temperature of the heat carrier fluid and to the fluid inlet (6) of at least one second line path (5) for the heat carrier fluid.

10. Apparatus according to either of Claims 8 and 9, **characterized in that** an electrical cooling or heating device is provided as a device (15) for temperature control.

11. Apparatus according to one of Claims 8 to 10, **characterized in that** a heat exchanger construction in thermal contact with the outside atmosphere or with cooling water, for example a fin tube construction, is provided as a device (15) for temperature control.

12. Apparatus according to one of Claims 8 to 11, **characterized in that** the heat carrier fluid is moved by means of a conveying device (32) through the functional parts of the heat exchanger (2) and through the device (15) for controlling the temperature of the heat carrier fluid.

13. Apparatus according to one of Claims 8 to 12, **characterized in that** brine, water, oil, air, a technical gas such as nitrogen, or carbon dioxide in a liquid or gaseous state is used as a heat carrier fluid.

## Revendications

1. Procédé pour tempérer un médium par contact thermique avec un fluide caloporteur dans un échangeur de chaleur (2) divisé en plusieurs parties fonctionnelles, dans lequel
le médium est mis en contact thermique avec le fluide caloporteur dans une première partie fonctionnelle de l'échangeur de chaleur (2), dans lequel de la chaleur est prélevée du, ou acheminée vers le, fluide caloporteur, laquelle est au moins partiellement transférée au médium, respectivement prélevée de celui-ci, ensuite, dans un dispositif (15) pour tempérer le fluide caloporteur, la chaleur prélevée, respectivement absorbée est de nouveau acheminée vers le, respectivement prélevée du, fluide caloporteur au moins partiellement et ensuite, le fluide caloporteur réchauffé, respectivement refroidi de cette manière est mis de nouveau en contact thermique avec le médium dans une deuxième partie fonctionnelle de l'échangeur de chaleur (2) en vue de l'échange de chaleur, dans lequel de la chaleur est de nouveau prélevée de, ou acheminée vers, le fluide caloporteur, **caractérisé en ce que** le fluide caloporteur est ensuite évacué.

2. Procédé selon la revendication 1, **caractérisé en ce que** le fluide caloporteur traverse plus de deux parties fonctionnelles de l'échangeur de chaleur (2), dans lequel dans chacune des parties fonctionnelles, un échange de chaleur a lieu avec le médium et après traversée de l'une des parties fonctionnelles, à l'exception ou sans exception de la partie fonctionnelle traversée en dernier, la chaleur prélevée de, respectivement absorbée par le fluide caloporteur lors du contact thermique avec le médium est de nouveau acheminée, respectivement prélevée au moins partiellement et le fluide caloporteur est ensuite évacué.

3. Procédé selon l'une des revendications précédentes, **caractérisé en ce que** dans le dispositif (15) pour tempérer le fluide caloporteur, l'acheminement, respectivement l'évacuation de la chaleur dégagée, respectivement absorbée par contact thermique avec le médium s'effectue par contact thermique avec un médium d'équilibrage en température, par exemple l'air environnant.

4. Procédé selon la revendication 4, **caractérisé en ce qu'**un fluide gazeux est employé en tant que fluide caloporteur, lequel est dirigé pour tempérer à une pression de 2 à 20 bar à travers l'échangeur de chaleur (2) et le dispositif (15).

5. Procédé selon l'une des revendications précédentes, **caractérisé en ce que** le fluide caloporteur est dirigé partiellement dans le circuit.

6. Procédé selon l'une des revendications précédentes, **caractérisé par** l'emploi pour le nettoyage d'un flux gazeux et/ou la décongélation de condensats dans un cryocondensateur.

7. Procédé selon la revendication 6, **caractérisé par** l'emploi dans une installation de cryocondensation comprenant au moins deux cryocondensateurs pouvant fonctionner alternativement, parmi lesquels respectivement un premier cryocondensateur est en état de fonctionnement et au moins un autre cryocondensateur est en état de décongélation, dans lequel le fluide caloporteur dans le cryocondensateur se trouvant en état de fonctionnement réchauffé par l'échange de chaleur avec le médium est employé pour réchauffer le (s) cryocondensateur(s) se trouvant en état de décongélation, dans lequel le fluide caloporteur, après avoir passé une première partie fonctionnelle de l'autre/des autres cryocondensateur(s) est acheminé vers un dispositif pour chauffer le fluide caloporteur et acheminé ensuite vers une autre partie fonctionnelle de l'autre/des autres cryocondensateur(s).

8. Dispositif pour exécuter le procédé selon l'une des revendications précédentes, comprenant une source (16) pour le fluide caloporteur, un échangeur de chaleur (2) qui présente plusieurs parties fonctionnelles reliées en écoulement entre elles tant par rapport au médium que par rapport au fluide caloporteur pour transférer la chaleur, dans lequel respectivement deux parties fonctionnelles consécutives en écoulement sont reliées entre elles par une conduite (14) pour le fluide caloporteur, dans laquelle conduite (14) est disposé un dispositif (15) pour tempérer le fluide caloporteur et comprenant une conduite de sortie (21) pour évacuer le fluide caloporteur.

9. Dispositif selon la revendication 8, **caractérisé en ce que** l'échangeur de chaleur (2) est doté d'un espace d'enveloppe (3) dans lequel le fluide caloporteur passe par plusieurs trajets de conduites (5) présentant respectivement une entrée de conduite (6) et une sortie de conduite (10), baignés par le médium, dans lequel la sortie de conduite (10) d'au moins un premier trajet de conduite est en liaison d'écoulement avec le dispositif (15) pour tempérer et avec l'entrée de conduite (6) d'au moins un second trajet de conduite (5) pour le fluide caloporteur.

10. Dispositif selon la revendication 8 ou 9, **caractérisé en ce qu'**un dispositif électrique de refroidissement ou de chauffage est prévu en tant que dispositif (15) pour tempérer.

11. Dispositif selon l'une des revendications 8 à 10, **caractérisé en ce qu'**une construction d'échangeur de chaleur, par exemple une construction à tubes à ailettes en contact thermique avec l'atmosphère extérieure ou avec de l'eau de refroidissement est prévue en tant que dispositif (15) pour tempérer.

12. Dispositif selon l'une des revendications 8 à 11, **caractérisé en ce que** le fluide caloporteur est déplacé au moyen d'un dispositif de transport (32) à travers les pièces fonctionnelles de l'échangeur de chaleur (2) et à travers le dispositif (15) pour tempérer.

13. Dispositif selon l'une des revendications 8 à 12, **caractérisé en ce que** de l'eau saline, de l'eau, de l'huile, de l'air, du gaz technique comme de l'azote, du dioxyde de carbone à l'état liquide ou gazeux est employé en tant que fluide caloporteur.
